(19) Europäisches Patentamt
European Patent Office
Office européen des brevets

(11) Publication number: 0 089 958 B1

(12) EUROPEAN PATENT SPECIFICATION

(45) Date of publication of patent specification: 27.12.85

(51) Int. Cl.$^4$: B 27 K 3/52 // A01N59/16, A01N33/04, A01N33/12, A01N33/00

(21) Application number: 82901379.6

(22) Date of filing: 27.04.82

(86) International application number: PCT/SE82/00141

(87) International publication number: WO 82/03817 11.11.82 Gazette 82/27

# (54) WOOD PRESERVATIVE COMPOSITIONS.

(30) Priority: 08.05.81 SE 8102915

(43) Date of publication of application: 05.10.83 Bulletin 83/40

(45) Publication of the grant of the patent: 27.12.85 Bulletin 85/52

(84) Designated Contracting States: AT BE CH DE FR LI NL

(56) References cited:
EP-A-0 039 538
EP-A-0 048 696
EP-A-0 058 142
AT-B- 354 060
AU-D-3 522 178
DE-A-2 461 613
DE-A-3 017 123
FR-A-2 260 950
FR-B-1 600 399
SE-A-77 053 981
US-A-4 001 400
US-A-4 193 993
US-A-4 225 637
US-A-4 313 976

(73) Proprietor: KenoGard AB
Box 11033
S-100 61 Stockholm (SE)

(72) Inventor: SUNDMAN, Carl-Erik
Dunungavägen 19
S-131 47 Nacka (SE)
Inventor: BENGTSSON, Cecilia
Skebokvarnsvägen 95
S-124 33 Bandhagen (SE)
Inventor: HÄGGLUND, Göran
Ägostigen 8
S-151 44 Södertälje (SE)

(74) Representative: Schöld, Zaid
c/o KemaNobel AB Patents Box 11065
S-100 61 Stockholm (SE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 089 958 B1

**Description**

The present invention relates to fungicidal compositions. More particularly the invention relates to wood preservative compositions based on metals and certain organic nitrogen-containing compounds. The compositions are especially good as preservatives for timber and other wood and wood-based products against rot.

Compositions based on metals such as e.g. copper are well-known as wood preservatives. Different manners of obtaining fixation of the metal in the wood when using such compositions are known. So-called CCA-salts were developed in the 1930's and have since then been the entirely dominating chemical agents for rot protection of wood. Copper is the essential fungicidal substance in the salts, while the arsenic mainly is used to give an insecticidal effect. Chromium is present as fixating agent for copper in the wood. CCA-salts and similar salts give a very good protection against rot but are entirely unsatisfactory from environmental reasons. Of the different components chronium should first of all be avoided as it has both a mutagen and a carcinogen effect. Salts of the CCA-type are also disadvantageous in that they, although they give a very satisfactory protection against common rot, do not give wood sufficient protection to avoid attacks from so-called soft rot. This type of rot does not, as common rot, come from fungi of the family basidomycetes but instead from fungi of the families ascomycetes or fungi imperfecti. Hardwoods are more susceptible to attacks from soft rot than softwoods and wood having a high water content is particularly susceptible. Soft rot grows more easily on impregnated wood than common rot.

There have been some attempts to replace the CCA-salts with agents which are more acceptable with respect to the environment. Most of this work has been based on different combinations of fatty acids and copper is ammoniacal solutions. Such compositions are for example described in the US patents 4,001,400 and 4,193,993. However, none of these compositions have been able to really compete with the CCA-salts which still are the dominating agents for rot protection. Like the CCA-salts the compositions based on fatty acids do not give satisfactory protection against soft rot.

It is also known to use organic nitrogen containing compounds as wood preservatives, and amines, amine salts as well as quaternary ammonium compounds have been used for this purpose. Further, from DE—A1—2 461 613 pesticidal compositions containing a copper compound which has formed a complex with aliphatic mono- or diamines containing at least 8 carbon atoms are known.

According to the present invention it has been found that compositions based on three main components, namely so-called preservative metals, e.g. copper, an organic nitrogen containing compound selected from fatty amines and quaternary ammonium compounds, and an ammoniacal compound or a short-chain amine give a very good protection of wood and similar materials against attacks from wood destroying fungi. The compositions are favourable from an environmental point of view and the organic compounds which contain nitrogen and an organic hydrophobic group give a good retention and fixation of the metal in the wood. The compositions give a substantially improved protection against attacks from soft rot.

The present invention thus relates to compositions having fungicidal properties, which compositions comprise 1) a compound of a preservative metal, 2) an organic nitrogen containing compound selected from, a) amines containing at least one organic hydrophobic group having six carbon atoms or more, and salts of these, and, b) quaternary ammonium compounds containing at least one organic hydrophobic group having six carbon atoms or more, and, 3) a compound selected from, ammonia, ammonium salts and short-chain amines.

The preservative metal in the compositions is selected from known such metals and can e.g. be copper, zinc, tin, cobalt, iron, magnesium, aluminium or nickel. The preservative metal is suitably selected from copper, tin and zinc and preferably the metal is copper. The metal is incorporated in the compositions in the form of a suitable compound, it can for example be added as oxide, hydroxide, carbonate, arsenate, sulfate, chloride, acetate.

The organic nitrogen containing compound is an amine, or an amine salt, or a quaternary ammonium compound. The organic compound shall contain at least one organic hydrophobic group. This group can be a straight or branched chain, saturated or unsaturated aliphatic group having at least 6 carbon atoms. The group suitably contains 6 to 18 carbon atoms and preferably 8 to 16. Ether bridges may be present in the group. The hydrophobic group can also be an alkylaryl group wherein the alkyl substituent contains 6 to 18 carbon atoms, preferably 8 to 16. The hydrophobic group is preferably an alkyl group.

By fatty amines is here understood mono- and diamines which may be primary, secondary or tertiary and which, as mentioned earlier, contain at least one hydrophobic group having at least 6 carbon atoms. These amines can be represented by the general formulae

$$R-\overset{\overset{R^1}{|}}{N}-R \quad \text{and} \quad R-\overset{\overset{R^1}{|}}{N}-(CH_2)_n-\overset{\overset{R^1}{|}}{N}-R_1$$

wherein R is the above defined hydrophobic group and the substituents $R_1$, independent of each other are hydrogen, a lower alkyl or hydroxyalkyl group having 1 to 4 carbon atoms, or benzyl groups or have the same meaning as R. In the diamines of the above formula n is an integer between 2 and 10, preferably n is 2

or 3. The amines are preferably used as salts. These salts can be inorganic, e.g. hydrochlorides. The organic salts are preferred and these can be salts of carboxylic acids having 2 to 10 carbon atoms. As examples of suitable salts can be mentioned acetate, butyrate, caprylate and 2-ethylhexanoate.

As examples of some suitable fatty amines, which, as said erlier, preferably are used as salts, can be mentioned octylamine, dodecylamine, octadecylamine, oleylamine, dioctylamine, didecylamine, dimethyloctylamine, dimethyldodecylamine, dimethyltetradecylamine, dimethyloctadecylamine, dimethyloleylamine, methyldioctylamine, methyldidecylamine, octyldiethanolamine, didodecyl - 1,3 - propylene diamine, olein - 1,3 - propylenediamine, octyl - 3 - oxypropylamine, N - (3 - octoxypropyl)propylene diamine, N - (decoxypropyl) - propylene diamine. Particularly suitable are the tertiary amines containing one or two higher groups, preferably one higher aliphatic group.

The quaternary ammonium compounds can be represented by the general formula

$$\begin{array}{c} R^1 \\ | \\ R{-}N^{+}{-}R_1 \qquad X^- \\ | \\ R^1 \end{array}$$

wherein R is the above defined hydrophobic group and the substituents, $R_1$ independent of each other are lower alkyl or hydroxyalkyl groups having 1 to 4 carbon atoms, benzyl groups or have the same meaning as R. X is an anion, preferably a chloride ion.

As examples of suitable quaternary ammonium compounds in the present compositions can be mentioned didecyldimethylammonium chloride, octyldecyldimethylammonium chloride, cetyltrimethylammonium chloride, (dodecylbenzyl)trimethylammonium chloride, alkylbenzyldimethylammonium chloride, wherein the carbon chain length distribution in the alkyl group corresponds to that of coco fatty acid. It is preferred that the quaternary ammonium compounds contain two higher aliphatic groups or one higher aliphatic group and a benzyl group or an alkylaryl group. Particularly suitable are quaternary ammonium compounds containing one organic hydrophobic group, one benzyl group and two alkyl or hydroxyalkyl groups having 1 to 4 carbon atoms. Quaternary ammonium compounds are the preferred organic nitrogen containing compounds.

The third component in the composition is ammonia, an ammonium salt or a short-chain, volatile amine. Ammonium salts are preferred as the third component and it is further preferred that it is an ammonium carbonate or ammonium bicarbonate. By short-chain amines is here understood amines containing alkyl or hydroxyalkyl groups having 1 to 4 carbon atoms. As examples of suitable amines can be mentioned ethanolamine and isopropanolamine. It is of course also within the scope of the invention that mixtures of ammonia and ammonium salts, ammonia and short-chain amines etc. can be used. The third component is very important as it retards the fixation of the metal which gives a more even microdistribution of the metal in the wood and thus an improved resulting fungicidal effect.

In the compositions the metal may be present in excess relative to the fatty amine or the quaternary ammonium compounds, or there may be less of the metal relative to these. Generally the molar ratio of metal to these compounds should be within the range 10:1 to 1:10, and suitably within the range 2:1 to 1:10. Preferably the molar ratio of metal to organic nitrogen containing compound is within the range 2:1 to 1:4, and most preferably 1:1 to 1:4.

The third component, ammonia, ammonium salt or short-chain amine, should suitably be present in an amount of at least one mole per mole of metal. The molar ratio between this compound and the metal may vary within rather wide limits and should generally be within the range 1:1 to 20:1, preferably within the range 4:1 to 10:1.

The present compositions can, if desired, be used in the form of solutions in organic solvents. It is, however, preferred that the compositions are used as aqueous solutions or aqueous dispersions. Water-based compositions can for example be prepared by mixing the metal compound and ammonia, ammonium salt or short-chain amine, and dissolving them in water whereafter the fungicidal organic compound, the fatty amine salt or the quaternary ammonium compound, is added.

Particularly preferred compositions according to the invention comprise a preservative metal, preferably copper, a compound selected from ammonia, ammonium salts and short-chain amines and a quaternary ammonium compound containing either two higher aliphatic groups or one higher aliphatic group and one benzyl group or one alkylaryl group. These compositions have been found to give an extremely satisfactory protection against soft rot and they can give beech, which is very hard to protect, a very satisfactory resistance against attack from this fungus.

The present compositions may of course contain other compounds and additives for specific desired properties of the treated material or for modification of the treatment solutions. The treatment solutions can for example contain emulsifiers and anti-foaming agents, wax emulsions can be present to make the surface of the treated materials hydrophobic etc. Insecticidal compounds, such as arsenic and organic insecticides and also other fungicides can be included in the compositions.

The wood preservative compositions can be used for treatment of timber, wood and wood based products. They can for example be used for treatment of poles, sawn timber, finished wood products such

as joineries and wood based products as particle board and board. The compositions are preferably used in the form of aqueous solutions or dispersions for wood treatment.

The compositions can be applied to the materials to be treated by any known technique, e.g. by dipping, spraying, brushing and vacuum/pressure impregnation. As the compositions are especially intended for rot protection treatment known pressure impregnation techniques are suitably used, e.g. according to Bethell, Lowry or Rueping. The concentration of the composition in the treatment solution should be adjusted with respect to the desired retention, type of wood or other material, the desired protection, the treatment method etc. The concentration in the treatment solution at impregnation is generally within the range from about 0.5 to about 5 percent by weight.

The invention is further illustrated in the following examples, which, however, are not intended to limit the same. Parts and per cent relate to parts by weight and per cent by weight respectively, unless otherwise stated.

Example 1

A composition according to the invention was prepared as follows. 43.5 g of $CuSO_4 \cdot 5H_2O$ and 16.6 g of ammonium were dissolved in 52.5 g of 25% ammonia. To this mixture 55.7 g of 50% benzalkonium chloride were added. The obtained product was a clear, dark blue solution.

Example 2

Pieces of beech (Fagus sylvatica) having the dimensions 200 · 20 · 20 mm were pressure impregnated, according to the Bethell-process, with different fungicidal compositions. The test pieces were stored for two weeks to allow fixation of the products. They were then placed in flowing water during one week to allow leaching. After this the pieces were sawn longitudinally to expose the central parts. The now obtained test pieces (dimensions 200 · 20 · 10 mm) were put into naturally infected soil. The temperature in the test room was kept at about 30°C and the relative humidity at about 95%.

Attack of rot was inspected after 3 months storage. The attack, of which the main part was due to soft rot, was evaluated by visual inspection according to a scale from 0 to 5 where 0 stands for no attack at all and 5 for completely attacked. The values shown in the table below are mean values for five test pieces.

| Fungicidal product | Retained amount active component kg/m$^3$ | Calculated cu-content in wood % w/w | Evaluation |
|---|---|---|---|
| Benzalkonium chloride | 8 | — | 3.9 |
| Benzalkonium chloride | 16 | — | 3.4 |
| Didecyldimethylammonium chloride | 8 | — | 4.2 |
| | 16 | — | 3.4 |
| $CuSO_4 \cdot 5H_2O$ | 5.5 | 0.24 | 2.1 |
| Dodecylbenzyltrimethyl-ammonium chloride: $CuSO_4 \cdot 5H_2O$ (molar ratio 2:1) | 8 | 0.12 | 3.3 |
| | 16 | 0.22 | 1.7 |
| Benzalkonium chloride: $Cu(NH_3)_4^{2+}$ (molar ratio 1:2) | 8 | 0.53 | 0.2 |
| | 12 | 0.8 | 0 |
| | 16 | 1.1 | 0 |
| Control, untreated | — | — | 5.0 |
| Boliden K33, CCA-salt, comparison | 8.6 | 0.17 | 3.8 |
| | 12.0 | 0.27 | 3.4 |
| | 16.8 | 0.36 | 3.2 |
| Celcure 0, copper-chromium salt, comparison | 12.9 | 0.43 | 2.9 |

Example 3

Soil block test was carried out with pine (pinus sylvestris) against the rot fungus *Coniophora puteana*.

Impregnated test blocks having the dimensions 15 · 10 · 7 mm were incubated with the actively growing fungus culture for six weeks and the weight loss was then determined for each block.

The toxic limit value for the fungicidal product was defined as the concentration of the product required to give a weight loss of less than 3% (mean value for 4 blocks) and not to give a weight loss of more than 5% for any block.

| Product | Toxic limit value (kg active ingredient/$m^3$ wood |
|---|---|
| Benzalkonium chloride | 3.8—5.7 |
| $Cu(NH_3)_4^{2+}$ | >5.9 kg copper/$m^3$ |
| Benzalkonium chloride: | 1.1—1.7 kg copper/$m^3$ |
| $Cu(NH_3)_4^{2+}$, molar ratio 1:2 | 2.9—4.5 kg ammonium compound/$m^3$ |

**Claims for the Contracting States AT BE CH FR LI NL**

1. Wood preservative composition, characterized in that it comprises
1) a compound of a preservative metal
2) an organic nitrogen containing compound selected from the groups
a) amines containing at least one organic hydrophobic group having 6 carbon atoms or more, or salts of these, and
b) quaternary ammonium compounds containing at least one organic hydrophobic group having 6 carbon atoms or more, and
3) a compound selected from ammonia, ammonium salts and short-chain amines having alkyl or hydroxyalkyl groups with 1 to 4 carbon atoms.

2. A composition according to claim 1, characterized in that the preservative metal is copper, tin or zinc.

3. A composition according to claim 2, characterized in that the preservative metal is copper.

4. A composition according to claim 1, characterized in that the organic nitrogen containing compound is a monoamine containing one aliphatic group having 6 to 18 carbon atoms, or a salt thereof.

5. A composition according to claim 4, characterized in that the amine is a tertiary amine, or a salt thereof.

6. A composition according to claim 1, characterized in that the organic nitrogen containing compound is a quaternary ammonium compound containing at least one organic hydrophobic group which is an aliphatic group or an alkylaryl group having at least 6 carbon atoms.

7. A composition according to claim 6, characterized in that the quaternary ammonium compound contains two hydrophobic groups which are aliphatic groups having 6 to 18 carbon atoms.

8. A composition according to claim 6, characterized in that the quaternary ammonium compound contains one organic hydrophobic group, one benzyl group and two alkyl or hydroxyalkyl groups having 1 to 4 carbon atoms.

9. A composition according to any of the preceding claims, characterized in that the molar ratio of metal to the organic nitrogen containing compound is within the range 10:1 to 1:10.

10. A composition according to any of the preceding claims, characterized in that it contains at least one mole of ammonia, ammonium salt or short-chain amine for each mole of metal.

**Claims for the Contracting State: DE**

1. Wood preservative composition, characterized in that it comprises
1) a compound of a preservative metal
2) an organic nitrogen containing compound selected from the groups
a) amines containing at least one organic hydrophobic group having 6 carbon atoms or more, or salts of these, and
b) quaternary ammonium compounds containing at least one organic hydrophobic group having 6 carbon atoms or more, and
3) a compound selected from ammonia, ammonium salts and short-chain amines having alkyl or hydroxyalkyl groups with 1 to 4 carbon atoms,
those compositions being excluded which are formulations comprising an aqueous ammoniacal solvent having a wood treating composition dissolved therein; where said composition contains a quaternary ammonium compound and a metallic cation comprising at least one of copper and zinc, where said quaternary ammonium compound can be represented by the general formula $(R_1R_2R_3R_4N^+)X^-$, where $R_1$ and $R_2$ are independently chosen from the group consisting of alkyl groups having 1 to 3 carbon atoms, $R_3$ is chosen from the group consisting of alkyl groups having 8 to 20 carbon atoms, and $R_4$ is chosen from the group consisting of alkyl groups having 8 to 20 carbon atoms, aryl groups and aryl-substituted alkyl groups where said substituted alkyl groups have 1—3 carbon atoms and $X^-$ is chosen so as to render said quaternary ammonium compound soluble in said ammoniacal solvent.

2. A composition according to claim 1, characterized in that the preservative metal is copper, tin or zinc.

3. A composition according to claim 2, characterized in that the preservative metal is copper.

4. A composition according to claim 1, characterized in that the organic nitrogen containing compound is a monoamine containing one aliphatic group having 6 to 18 carbon atoms, or a salt thereof.

5. A composition according to claim 4, characterized in that the amine is a tertiary amine, or a salt thereof.

6. A composition according to claim 1, characterized in that the organic nitrogen containing compound is a quaternary ammonium compound containing at least one organic hydrophobic group which is an aliphatic group or an alkylaryl group having at least 6 carbon atoms.

7. A composition according to claim 6, characterized in that the quaternary ammonium compound contains two hydrophobic groups which are aliphatic groups having 6 to 18 carbon atoms.

8. A composition according to claim 6, characterized in that the quaternary ammonium compound contains one organic hydrophobic group, one benzyl group and two alkyl or hydroxy-alkyl groups having 1 to 4 carbon atoms.

9. A composition according to any of the preceding claims, characterized in that the molar ratio of metal to the organic nitrogen containing compound is within the range 10:1 to 1:10.

10. A composition according to any of the preceding claims, characterized in that it contains at least one mole of ammonia, ammonium salt or short-chain amine for each mole of metal.

**Patentansprüche für die Vertragsstaaten AT, BE, CH, FR, LI, NL**

1. Holzkonservierungszusammensetzung, dadurch gekennzeichnet, daß sie umfaßt

1) eine Verbindung eines konservierenden Metalls,

2) eine organische, stickstoffhaltige Verbindung, ausgewählt aus den Gruppen

a) Amine, enthaltend wenigstens eine organische, hydrophobe Gruppe mit 6 Kohlenstoffatomen oder mehr oder Salze davon und

b) quaternären Ammoniumverbindungen, enthaltend wenigstens eine organische, hydrophobe Gruppe mit 6 Kohlenstoffatomen oder mehr und

3) eine Verbindung, ausgewählt aus Ammoniak, Ammoniumsalzen und kurzkettigen Aminen mit Alkyl- oder Hydroxyalkylgruppen mit 1 bis 4 Kohlenstoffatomen.

2. Eine Zusammensetzung gemäß Anspruch 1, dadurch gekennzeichnet, daß das konservierende Metall Kupfer, Zinn oder Zink ist.

3. Eine Zusammensetzung gemäß Anspruch 2, dadurch gekennzeichnet, daß das konservierende Metall Kupfer ist.

4. Eine Zusammensetzung gemäß Anspruch 1, dadurch gekennzeichnet, daß die organische, stickstoffhaltige Verbindung ein Monoamin, enthaltend eine aliphatische Gruppe mit 6 bis 18 Kohlenstoffatomen oder ein Salz davon ist.

5. Eine Zusammensetzung gemäß Anspruch 4, dadurch gekennzeichnet, daß das Amin ein tertiäres Amin oder ein Salz davon ist.

6. Eine Zusammensetzung gemäß Anspruch 1, dadurch gekennzeichnet, daß die organische stickstoffhaltige Verbindung eine quaternäre Ammoniumverbindung mit wenigstens einer organischen hydrophoben Gruppe ist, welche eine aliphatische Gruppe oder eine Alkylarylgruppe mit wenigstens 6 Kohlenstoffatomen ist.

7. Zusammensetzung gemäß Anspruch 6, dadurch gekennzeichnet, daß die quaternäre Ammoniumverbindung zwei hydrophobe Gruppen enthält, welche aliphatische Gruppen mit 6 bis 18 Kohlenstoffatomen sind.

8. Eine Zusammensetzung gemäß Anspruch 6, dadurch gekennzeichnet, daß die quaternäre Ammoniumverbindung eine organische hydrophobe Gruppe, eine Benzylgruppe und zwei Alkyloder Hydroxyalkylgruppen mit 1 bis 4 Kohlenstoffatomen enthält.

9. Zusammensetzung gemäß irgendeinem der vorhergehenden Ansprüche, dadurch gekennzeichnet, daß das Molverhältnis von Metall zu der organischen stickstoffhaltigen Verbindung innerhalb des Bereichs von 10:1 bis 1:10 liegt.

10. Zusammensetzung gemäß einem der vorhergehenden Ansprüche, dadurch gekennzeichnet, daß sie wenigstens 1 Mol Ammoniak, Ammoniumsalz oder kurzkettiges Amin für jedes Mol Metall enthält.

**Patentansprüche für den Vertragsstaat DE**

1. Holzkonservierungszusammensetzung, dadurch gekennzeichnet, daß sie umfaßt

1) eine Verbindung eines konservierenden Metalls,

2) eine organische stickstoffhaltige Verbindung, ausgewählt aus den Gruppen

a) Amine, enthaltend wenigstens eine organische hydrophobe Gruppe mit 6 Kohlenstoffatomen oder mehr oder Salze davon und

b) quaternären Ammoniumverbindungen, enthaltend wenigstens eine organische hydrophobe Gruppe mit 6 Kohlenstoffatomen oder mehr und

3) eine Verbindung, ausgewählt aus Ammoniak, Ammonium- salzen und kurzkettigen Aminen mit Alkyl- oder Hydroxyalkylgruppen mit 1 bis 4 Kohlenstoffatomen,

wobei solche Zusammensetzungen ausgeschlossen sind, welche Formulierungen sind, umfassend ein wäßriges ammoniakalisches Lösungsmittel mit einer darin gelösten Holzbehandlungszusammensetzung; wobei diese Zusammensetzung eine quaternäre Ammoniumverbindung und ein metallisches Kation,

umfassend wenigstens eines von Kupfer und Zink, enthält, wobei diese quaternäre Ammoniumverbindung durch die allgemeine Formel $(R_1R_2R_3R_4N^+)X^-$ dargestellt werden kann, wobei $R_1$ und $R_2$ unabhängig ausgewählt sind aus der Gruppe bestehend aus Alkylgruppen mit 1 bis 3 Kohlenstoffatomen, $R_3$ ausgewählt ist aus der Gruppe, bestehend aus Alkylgruppen mit 8 bis 20 Kohlenstoffatomen, und $R_4$ ausgewählt ist aus der Gruppe, bestehend aus Alkylgruppen mit 8 bis 20 Kohlenstoffatomen, Arylgruppen und aryl-substituierten Alkylgruppen, wobei diese substituierten Alkylgruppen 1 bis 3 Kohlenstoffatome haben und $X^-$ so ausgewählt ist, daß diese quaternäre Ammoniumverbindung in dem genannten ammoniakalischen Lösungsmittel löslich gemacht ist.

2. Zusammensetzung gemäß Anspruch 1, dadurch gekennzeichnet, daß das konservierende Metall Kupfer, Zinn oder Zink ist.

3. Zusammensetzung gemäß Anspruch 2, dadurch gekennzeichnet, daß das konservierende Metall Kupfer ist.

4. Zusammensetzung gemäß Anspruch 1, dadurch gekennzeichnet, daß die organische stickstoffhaltige Verbindung ein Monoamin, enthaltend eine aliphatische Gruppe mit 6 bis 18 Kohlenstoffatomen oder ein Salz davon ist.

5. Zusammensetzung gemäß Anspruch 4, dadurch gekennzeichnet, daß das Amin ein tertiäres Amin oder ein Salz davon ist.

6. Zusammensetzung gemäß Anspruch 1, dadurch gekennzeichnet, daß die organische stickstoffhaltige Verbindung eine quaternäre Ammoniumverbindung ist, die wenigstens eine organische hydrophobe Gruppe enthält, welche eine aliphatische Gruppe oder eine Alkyarylgruppe mit wenigstens 6 Kohlenstoffatomen ist.

7. Zusammensetzung gemäß Anspruch 6, dadurch gekennzeichnet, daß die quaternäre Ammoniumverbindung zwei hydrophobe Gruppen enthält, welche aliphatische Gruppen mit 6 bis 18 Kohlenstoffatomen sind.

8. Zusammensetzung gemäß Anspruch 6, dadurch gekennzeichnet, daß die quaternäre Ammoniumverbindung eine organische hydrophobe Gruppe, eine Benzylgruppe und zwei Alkyl- oder Hydroxyalkylgruppen mit 1 bis 4 Kohlenstoffatomen enthält.

9. Zusammensetzung gemäß einem der vorhergehenden Ansprüche, dadurch gekennzeichnet, daß das Molverhältnis von Metall zu organischer stickstoffhaltiger Verbindung innerhalb des Bereichs 10:1 bis 1:10 liegt.

10. Zusammensetzung gemäß einem der vorgehenden Ansprüche, dadurch gekennzeichnet, daß sie wenigstens 1 Mol Ammoniak, Ammoniumsalz oder kurzkettiges Amin für jedes Mol Metall enthält.

**Revendications pour les Etats Contractants AT, BE, CH, FR, LI, NL**

1. Composition pour la protection du bois, caractérisée en ce qu'elle comprend:

1) un dérivé d'un métal protecteur

2) un dérivé organique contenant de l'azote choisi parmi les groupes suivants:

a) les amines contenant au moins un groupe hydrophobe organique ayant 6 ou plus, atomes de carbone, ou des sels de celles-ci, et

b) les dérivés d'ammonium quaternaire comportant au moins un groupe hydrophobe organique ayant 6 atomes de carbone ou plus, et

3) un composé choisi parmi l'ammoniac, les sels d'ammonium et des amines à chaîne courte comportant des groupes alkyle ou hydroxyalkyle ayant de 1 à 4 atomes de carbone.

2. Composition selon la revendication 1, caractérisée en ce que le métal protecteur est le cuivre, l'étain ou le zinc.

3. Composition selon la revendication 2, caractérisée en ce que le métal protecteur est le cuivre.

4. Composition selon la revendication 1, caractérisée en ce que le dérivé organique contenant de l'azote est une mono-amine, comportant un groupe aliphatique ayant de 6 à 18 atomes de carbone, ou un sel de celle-ci.

5. Composition selon la revendication 4, caractérisée en ce que l'amine est une amine tertiaire ou un de ses sels.

6. Composition selon la revendication 1, caractérisée en ce que le composé organique contenant de l'azote est un dérivé d'ammonium quaternaire comportant au moins un groupe organique hydrophobe, qui est un groupe aliphatique ou un groupe alkyl-aryle ayant au moins 6 atomes de carbone.

7. Composition selon la revendication 6, caractérisée en ce que le dérivé d'ammonium quaternaire comporte deux groupes hydrophobes qui sont des groupes aliphatiques ayant de 6 à 18 atomes de carbone.

8. Composition selon la revendication 6, caractérisée en ce que le dérivé d'ammonium quaternaire comporte un groupe organique hydrophobe, un groupe benzyle et deux groupes alkyle ou hydroxyalkyle ayant de 1 à 4 atomes de carbone.

9. Composition selon l'une quelconque des revendications précédentes, caractérisée en ce que le rapport molaire entre le métal et le composé organique contenant l'azote est compris entre 10/1 et 1/10.

10. Composition selon l'une quelconque des revendications précédentes, caractérisée en ce qu'elle

contient au moins une mole d'ammoniac, de sel d'ammonium ou d'amine à chaîne courte pour chaque mole de métal.

**Revendications pour l'Etat Contractant DE**

1. Composition pour la préservation du bois, caractérisée en ce qu'elle comprend:
1) un dérivé d'un métal protecteur
2) un dérivé organique contenant de l'azote choisi parmi les groupes suivants:
a) les amines contenant au moins un groupe hydrophobe organique ayant 6 atomes de carbone ou plus, ou des sels de celles-ci et,
b) les dérivés d'ammonium quaternaire comportant au moins un groupe hydrophobe organique ayant 6 ou plus atomes de carbone, et
3) un composé choisi parmi l'ammoniac, les sels d'ammonium et les amines à chaîne courte comportant des groupes alkyle ou hydroxyalkyle ayant de 1 à 4 atoms de carbone, les compositions étant exclues dont les formules comportent un solvant aqueux ammoniacal dans lequel est dissoute une composition pour la protection du bois; où ladite composition comporte un dérivé d'ammonium quaternaire et un cation métallique qui est pour le moins le cuivre ou le zinc, où ledit dérivé d'ammonium quaternaire peut être représenté par la formule générale $(R_1R_2R_3R_4N^+)X^-$, où $R_1$ et $R_2$ sont choisis indépendamment l'un de l'autre dans le groupe comprenant les groupes alkyle ayant de 1 à 3 atomes de carbone, $R_3$ est choisi dans le groupe comprenant les groupes alkyle ayant de 8 à 20 atomes de carbone et $R_4$ est choisi dans le groupe comprenant les groupes alkyle ayant de 8 à 20 atomes de carbone, les groupes aryle et les groupes alkyle substitués par des groupes aryle où les groupes alkyle substitués ont de 1 à 3 atomes de carbone at $X^-$ est choisi de façon à rendre ledit dérivé d'ammonium quaternaire soluble dans le solvant ammoniacal.

2. Composition selon la revendication 1, caractérisée en ce que le métal protecteur est le cuivre, l'étain ou le zinc.

3. Composition selon la revendication 2, caractérisée en ce que le métal protecteur est le cuivre.

4. Composition selon la revendication 1, caractérisée en ce que le dérivé organique contenant de l'azote est une mono-amine, comportant un groupe aliphatique ayant de 6 à 18 atomes de carbone, ou un sel de celle-ci.

5. Composition selon la revendication 4, caractérisée en ce que l'amine est une amine tertiaire ou un de ses sels.

6. Composition selon la revendication 1, caractérisée en ce que le composé organique contenant de l'azote est un dérivé d'ammonium quaternaire comportant au moins un groupe organique hydrophobe, qui est un groupe aliphatique ou un groupe alkyl-aryle ayant au moins 6 atomes de carbone.

7. Composition selon la revendication 6, caractérisée en ce que le dérivé d'ammonium quaternaire comporte deux groupes hydrophobes qui sont des groupes aliphatiques ayant de 6 à 18 atomes de carbone.

8. Composition selon la revendication 6, caractérisée en ce que le dérivé d'ammonium quaternaire comporte un groupe organique hydrophobe, un groupe benzyle et deux groupes alkyle ou hydroxyalkyle ayant de 1 à 4 atomes de carbone.

9. Composition selon l'une quelconque des revendications précédentes, caractérisée en ce que le rapport molaire entre le métal et le composé organique contenant l'azote est compris entre 10/1 et 1/10.

10. Composition selon l'une quelconque des revendications précédentes, caractérisé en ce qu'elle contient au moins une mole d'ammoniac, de sel d'ammonium ou d'amine à chaîne courte pour chaque mole de métal.